# EUROPEAN PATENT APPLICATION

(11) **EP 2 728 169 A2**
(43) Date of publication of application: **07.05.2014**
(21) Application number: 13190356.9
(22) Date of filing: 25.10.2013
(51) Int. Cl.: F03D 1/06

(54) **Structural members for a wind turbine rotor blade**

(30) Priority: 31.10.2012 US 201213664545
(71) Applicant: General Electric Company, Schenectady, New York 12345 (US)
(72) Inventor: Bell, Eric, Greenville, SC South Carolina 29615 (US); Gann, Matthew G., Greenville, SC South Carolina 29615 (US); Yarbrough, Aaron, Greenville, SC South Carolina 29615 (US)
(74) Representative: Bedford, Grant Richard

(57) **Abstract**

A rotor blade 20 for a wind turbine 10 is disclosed. The rotor blade 20 includes a blade root 102, a blade tip 104 and a body 106 extending between the blade root 102 and the blade tip 104. The body 106 has a pressure side and a suction side extending between a leading edge 112 and a trailing edge 114. The body 106 also defines an inner surface 116. The rotor blade 20 also includes a spar member 122 extending between a portion of the inner surface 116 defined on the pressure side of the body and a portion of the inner surface defined on the suction side of the body 106. In addition, the rotor blade 20 includes a plurality of structural members extending adjacent to the inner surface 116. The structural members are configured to intersect one another along the inner surface 116.

## Description

The present subject matter relates generally to wind turbines and, more particularly, to structural members for wind turbine rotor blades.

Wind power is considered one of the cleanest, most environmentally friendly energy sources presently available, and wind turbines have gained increased attention in this regard. A modem wind turbine typically includes a tower, generator, gearbox, nacelle, and one or more rotor blades. The rotor blades capture kinetic energy from wind using known airfoil principles and transmit the kinetic energy through rotational energy to turn a shaft coupling the rotor blades to a gearbox, or if a gearbox is not used, directly to the generator. The generator then converts the mechanical energy to electrical energy that may be deployed to a utility grid.

Conventional rotor blades typically include a body formed from two shell halves coupled together along corresponding edges of the rotor blade. The shell halves are typically formed using a core material (e.g., balsa wood or foam) sandwiched between layers of a laminate composite structural material (e.g., a carbon or glass fiber-reinforced laminate composite). Such core material is primarily used to increase the distance between the neutral bending axis of the rotor blade and the outer layers of structural material, thereby decreasing the bending stresses transmitted through the laminate material and increasing the stiffness of the rotor blade. However, the use of the core material adds considerable weight to the rotor blade and, thus, contributes to higher loads acting on the blade during wind turbine operation. Moreover, the core material is typically relatively expensive, thereby adding to the overall costs of manufacturing a rotor blade.

Accordingly, a rotor blade configuration that allows for the elimination of the core material used within at least a portion of the rotor blade would be welcomed in the technology.

Various aspects and advantages of the invention will be set forth in part in the following description, or may be clear from the description, or may be learned through practice of the invention.

In one aspect, the present subject matter is directed to a rotor blade for a wind turbine. The rotor blade includes a blade root, a blade tip and a body extending between the blade root and the blade tip. The body has a pressure side and a suction side extending between a leading edge and a trailing edge. The body also defines an inner surface. The rotor blade also includes a spar member extending between a portion of the inner surface defined on the pressure side of the body and a portion of the inner surface defined on the suction side of the body. In addition, the rotor blade includes a plurality of structural members extending adjacent to the inner surface. The structural members are configured to intersect one another along the inner surface.

In another aspect, the present subject matter is directed to a wind turbine including a tower, a nacelle mounted on the tower and a rotor coupled to the nacelle. The rotor includes a hub and at least one rotor blade extending outwardly from the hub. The rotor blade includes a blade root, a blade tip and a body extending between the blade root and the blade tip. The body has a pressure side and a suction side extending between a leading edge and a trailing edge. The body also defines an inner surface. The rotor blade also includes a spar member extending between a portion of the inner surface defined on the pressure side of the body and a portion of the inner surface defined on the suction side of the body. In addition, the rotor blade includes a plurality of structural members extending adjacent to the inner surface. The structural members are configured to intersect one another along the inner surface.

In a further aspect, the present subject matter is directed to a method for manufacturing a rotor blade having a body defining an inner surface. The method may generally include positioning a first plurality of structural members adjacent to the inner surface and positioning a second plurality of structural members adjacent to the inner surface such that the second plurality of structural members intersects the first plurality of structural members along the inner surface.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 illustrates a side view of one embodiment of a wind turbine;
FIG. 2 illustrates a perspective view of one embodiment of a rotor blade configured for use with the wind turbine shown in FIG. 1;
FIG. 3 illustrates a cross-sectional view of the rotor blade shown in FIG. 2 taken about line 3-3;
FIG. 4 illustrates a perspective view of the rotor blade shown in FIG. 1;
FIG. 5 illustrates a cross-sectional view of one embodiment of a structural member configured for use within the rotor blade shown in FIG. 2, particularly illustrating the structural member having a T-shaped cross-section;
FIG. 6 illustrates a cross-sectional view of another embodiment of a structural member configured for use within the rotor blade shown in FIG. 2, particularly illustrating the structural member having a hat-shaped cross-section;
FIG. 7 illustrates a cross-sectional view of a further embodiment of a structural member configured for use within the rotor blade shown in FIG. 2, particularly illustrating the structural member having a Z-shaped cross-section;
FIG. 8 illustrates a cross-sectional view of yet another embodiment of a structural member configured for use within the rotor blade shown in FIG. 2, particularly illustrating the structural member having a J-shaped cross-section;
FIG. 9 illustrates a cross-sectional view of an even further embodiment of a structural member configured for use within the rotor blade shown in FIG. 2, particularly illustrating the structural member having a I-shaped cross-section;
FIG. 10 illustrates a cross-sectional view of another embodiment of a structural member configured for use within the rotor blade shown in FIG. 2, particularly illustrating the structural member having a C-shaped cross-section;
FIG. 11 illustrates a cross-sectional view of the rotor blade shown in FIG. 2 taken about line 11-11; and
FIG. 12 illustrates a perspective, cut-way view of another embodiment of a rotor blade configured for use with the wind turbine shown in FIG. 1.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

In general, the present subject matter is directed to a rotor blade having intersecting structural members extending along its inner surface. The intersecting structural members provide increased stiffness, strength and/or buckling resistance to the rotor blade by providing additional structural material spaced apart from the neutral bending axis of the blade. Due to such enhanced structural properties, the rotor blade may be formed without the use of a core material within at least a portion of the blade's body, thereby reducing the overall weight and cost of the rotor blade.

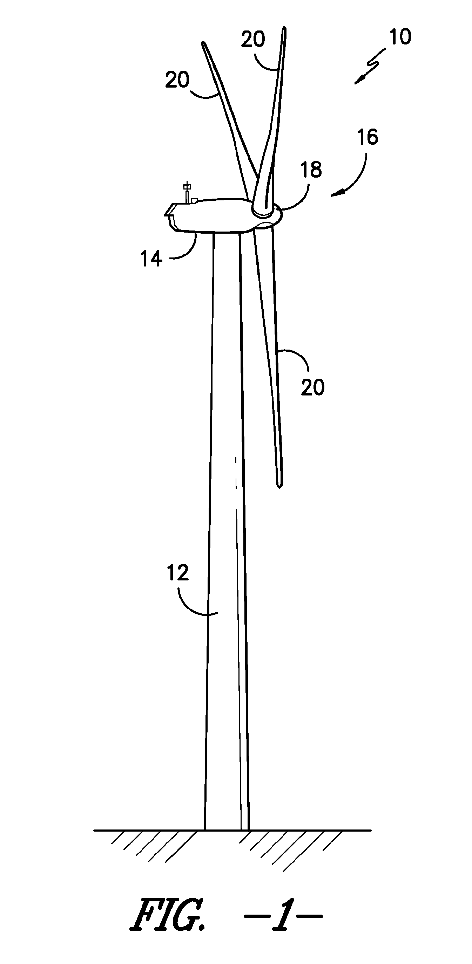

Referring now to the drawings, FIG. 1 illustrates a side view of one embodiment of a wind turbine 10. As shown, the wind turbine 10 generally includes a tower 12, a nacelle 14 mounted on the tower 12, and a rotor 16 coupled to the nacelle 14. The rotor 16 includes a rotatable hub 18 and at least one rotor blade 20 coupled to and extending outwardly from the hub 18. For example, in the illustrated embodiment, the rotor 16 includes three rotor blades 20. However, in an alternative embodiment, the rotor 16 may include more or less than three rotor blades 20. Each rotor blade 20 may be spaced about the hub 18 to facilitate rotating the rotor 16 to enable kinetic energy to be transferred from the wind into usable mechanical energy, and subsequently, electrical energy. For instance, the hub 18 may be rotatably coupled to an electric generator (not shown) positioned within the nacelle 14 to permit electrical energy to be produced.

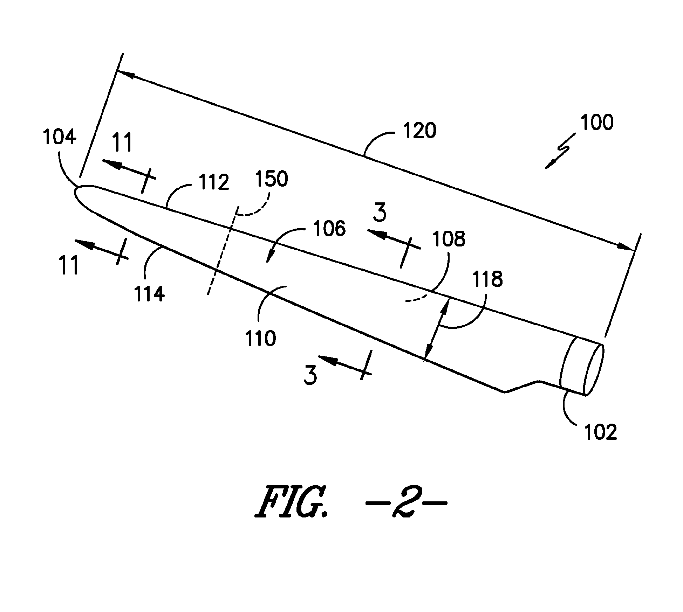

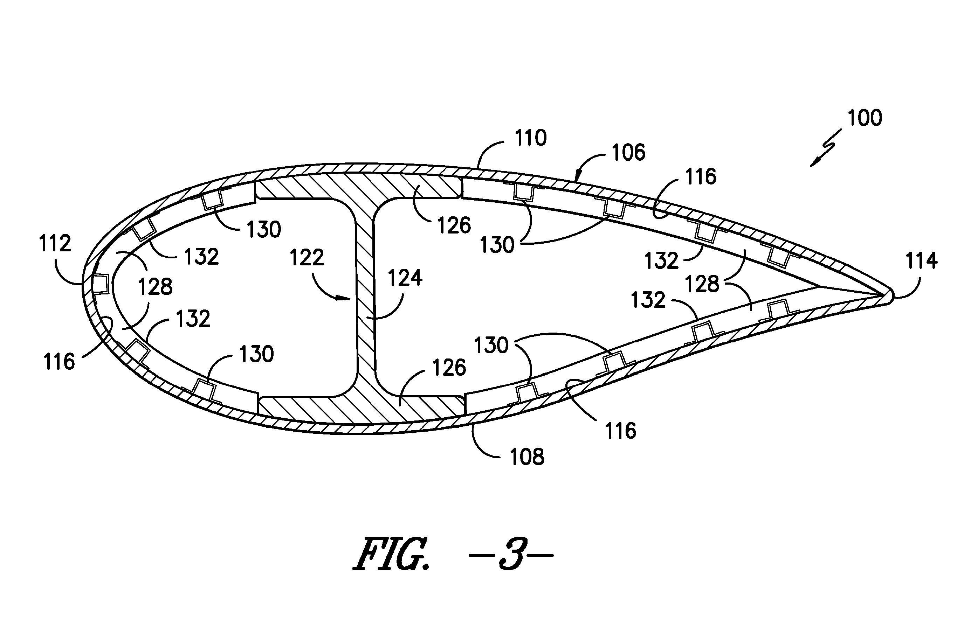

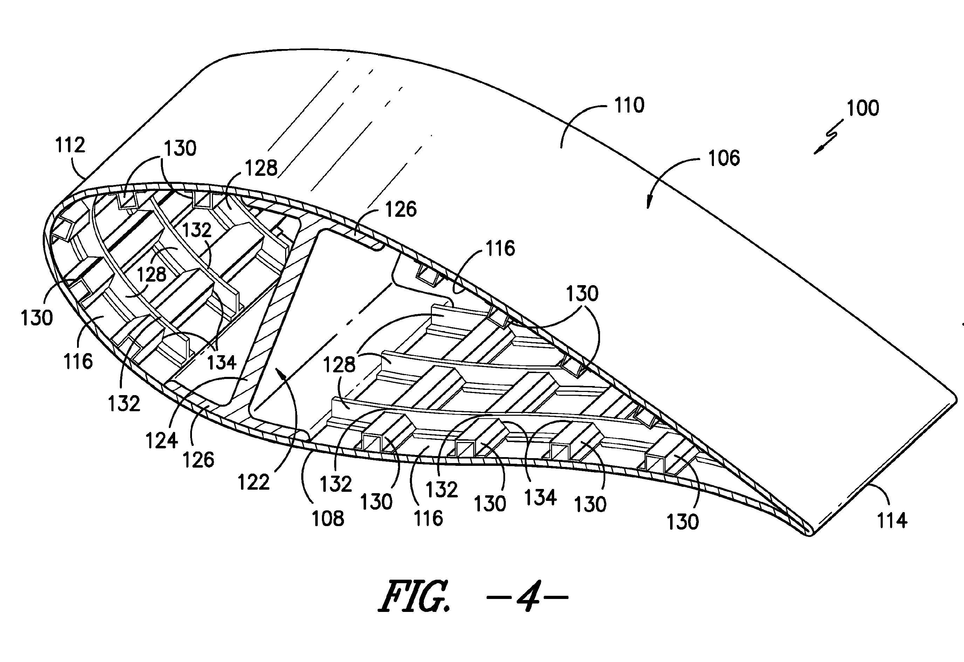

Referring now to FIGS. 2-4, one embodiment a rotor blade 100 configured for use with the wind turbine 100 shown in FIG. 1 is illustrated in accordance with aspects of the present subject matter. Specifically, FIG. 2 illustrates a perspective view of the rotor blade 100 and FIG. 3 illustrates a cross-sectional view of the rotor blade 100 shown in FIG. 2 taken about line 3-3. Additionally, FIG. 4 illustrates a perspective view of the rotor blade 100 shown in FIG. 3.

As shown, the rotor blade 100 generally includes a blade root 102 configured for mounting the rotor blade 100 to the hub 18 of the wind turbine 10 (FIG. 1) and a blade tip 104 disposed opposite the blade root 102. A body 106 of the rotor blade 100 may generally be configured to extend between the blade root 102 and the blade tip 104 and may serve as the outer casing/skin of the blade 100. In several embodiments, the body 106 may define a substantially aerodynamic profile, such as by defining a symmetrical or cambered airfoil-shaped cross-section. As such, the body 106 may include a pressure side 108 and a suction side 110 extending between a leading edge 112 and a trailing edge 114. In addition, the body 106 may generally define an inner surface 116. For example, as shown in FIGS. 3 and 4, the inner surface 116 may generally extend between the leading and trailing edges 112, 114 along both the pressure and suction sides 110, 112 so as to define the inner perimeter of the body 106.

In several embodiments, the body 106 of the rotor blade 100 may be formed as a single, unitary component. Alternatively, the body 106 may be formed from a plurality of shell components. For example, the body 106 may be manufactured from a first shell half generally defining the pressure side 108 of the rotor blade 100 and a second shell half generally defining the suction side 110 of the rotor blade 10, with the shell halves being secured to one another at the leading and trailing edges 112, 114 of the blade 100.

The rotor blade 100 may also have a span 118 defining the total length between the blade root 102 and the blade tip 104 and a chord 120 defining the total length between the leading edge 112 and the trailing edge 114. As is generally understood, the chord 120 may vary in length with respect to the span 118 as the rotor blade 100 extends from the blade root 102 to the blade tip 104.

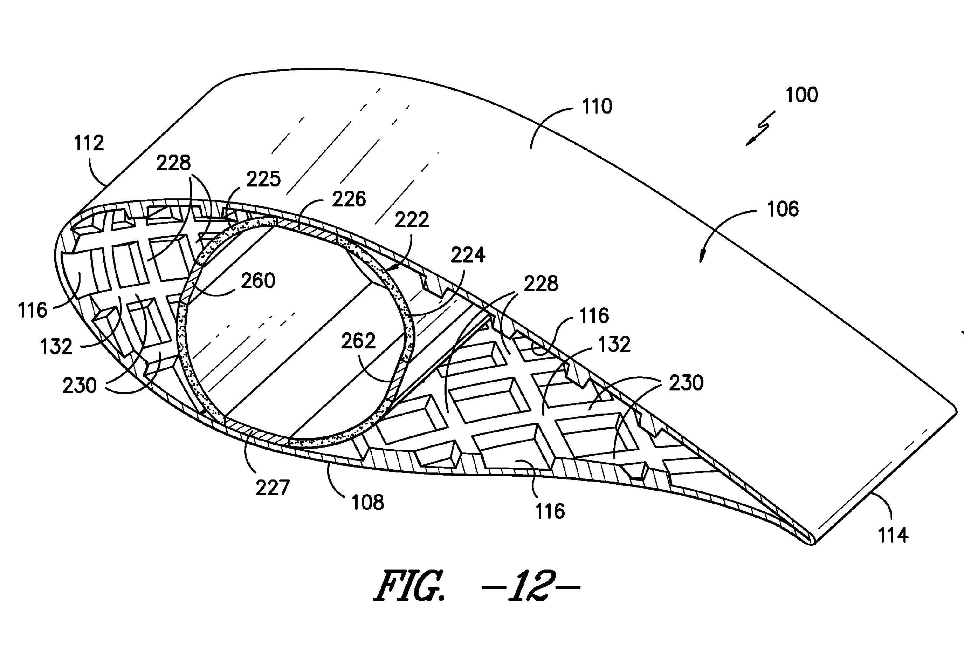

In addition, the rotor blade 100 may also include a longitudinally extending spar member 122 configured to provide increased stiffness, buckling resistance and/or strength to the rotor blade 100. As particularly shown in FIG. 3, in one embodiment, the spar member 122 may include one or more shear webs 124 extending perpendicularly between corresponding spar caps 126 disposed on opposed sides of the inner surface 116. However, in other embodiments, the spar member 122 may have any other suitable configuration. For example, as will be described below with reference to FIG. 12, the spar member 122 may have a tubular configuration. Moreover, it should be appreciated that, although the rotor blade 100 is illustrated as only including a single spar member 122, the rotor blade 100 may generally include any number of spar members 122. For instance, in one embodiment, the rotor blade 100 may include a primary spar member 122 and an auxiliary spar member 122 spaced apart from one another along the chord 120 of the blade 100.

Referring particularly now to FIGS. 3 and 4, the rotor blade 100 may also include a plurality of intersecting structural members 128, 130 extending along and/or adjacent to the inner surface 116 of the body 106. In general, the structural members 128, 130 may serve to increase the stiffness, strength and/or buckling resistance of the rotor blade 100 by providing additional structural material spaced apart from the neutral bending axis of the rotor blade 100. Specifically, as is generally understood, as the distance between the neutral bending axis and the structural material of the rotor blade 100 is increased, the bending stresses transmitted through the structural material are decreased.

In several embodiments, the rotor blade 100 may generally include a first set of structural members 128 and a second set of structural members 130, with the first set of structural members 128 being configured to intersect the second set of structural members 130 along the inner surface 116 of the body 106. For example, as shown in FIGS. 3 and 4, the first set of structural members 128 may be configured to extend along the inner surface 116 of the body 106 in a generally chordwise direction while the second set of structural members 130 may be configured to extend along the inner surface 116 in a generally spanwise direction. As such, the first set of structural members 128 may be oriented perpendicularly relative to the second set of structural members 130 at each intersection 132 defined between the structural members 128, 130. As used herein, a structural member may extend in a "generally chordwise direction" along the inner surface 116 by extending between the leading and trailing edges 112, 114 along a path that is generally aligned with a chord line defined at any given point along the span 118 of the rotor blade 100. Similarly, a structural member may extend in a "generally spanwise direction" along the inner surface 116 by extending along a path defined between the blade root 102 and the blade tip 104 that remains entirely on either the pressure side 108 or the suction side 110 of the rotor blade 100.

It should be appreciated that, in alternative embodiments, the first and second sets of structural members 128, 130 may have any other suitable orientation relative to the rotor blade 100 and/or relative to one another. For example, as will be described below with reference to FIG. 12, the first and second sets of structural members 128, 130 may be angled relative to the chordwise and spanwise directions. Similarly, in one embodiment, the first set of structural members 128 may be oriented non-perpendicularly relative to the second set of structural members 130 at each intersection 132 defined along the inner surface 116.

Additionally, in several embodiments, the structural members 128, 130 may be configured to be separately coupled to the inner surface 116 of the rotor blade 100 using any suitable attachment means and/or method known in the art. For example, the structural members 128, 130 may be coupled to the inner surface 116 using mechanical fasteners (e.g., bolts, screws, pins, rivets and/or the like), adhesives and/or any other suitable means and/or method (e.g., by using a wet lay-up process to attach the structural members 128, 130 to the inner surface 116). It should be appreciated that, in embodiments in which the structural members 128, 130 are separately coupled to the inner surface 116, one or both sets of the structural members 128, 130 may include suitable grooves, recesses, channels and/or other features that allow the structural members 128, 130 to intersect one another along the inner surface 116. For example, as shown in FIG. 4, in one embodiment, the first set of structural members 128 may define grooves, channels and/or other mating features 134 at each intersection 132 that are configured to receive portions of the second set of structural members 130. As such, the first set of structural members 128 may generally be configured to overlap the second set structural members 130 along the inner surface 116. In another embodiment, such an overlapping configuration may be achieved by defining grooves, channels and/or other mating features in the second set of structural members such that the first set of structural members 130 may be received within and extend through such mating features at each intersection 132. In further embodiments, the structural members 128, 130 may have any other suitable mating features and/or configuration that permits such members 128, 130 to intersect one another along the inner surface 116 of the rotor blade 100. For example, in one embodiment, the first set of structural members 128 or the second set of structural members 130 may be non-continuous or otherwise broken at each intersection 132 to permit the structural members 128, 130 to intersect one another along the inner surface 116.

It should be appreciated that the structural members 128, 130 may generally be formed from any suitable material that permits the members 128, 130 to function as described herein. For example, in one embodiment, the structural members 128, 130 may be formed from a laminate composite material, such as a carbon or glass fiber-reinforced laminate composite. In other embodiments, the structural members 128, 130 may be formed from various other materials, such as a metal material, a thermoplastic material and/or any other suitable material(s).

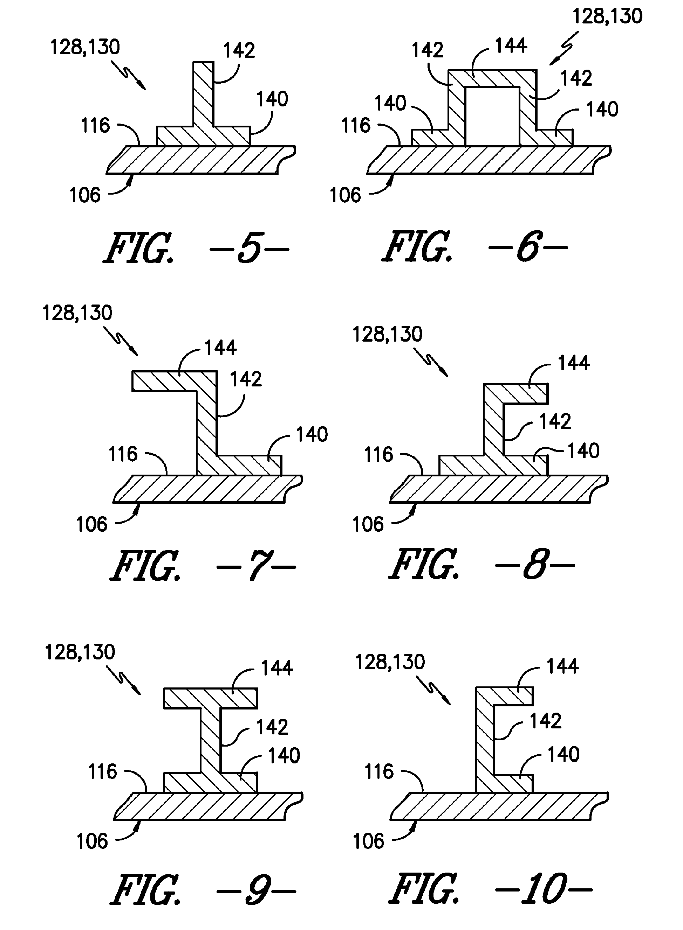

Additionally, it should be appreciated that the structural members 128, 130 may generally be configured to define any suitable cross-sectional shape. For instance, various non-limiting examples of suitable cross-sectional shapes that may be utilized for the first set of structural members 128 and/or the second set of structural members 130 are illustrated in FIGS. 5-10. As shown in FIG. 5, in one embodiment, the structural member(s) 128, 130 may define a cross-sectional shape corresponding to a T-shape (e.g., wherein the structural member(s) 128, 130 includes a lower portion 140 extending directly adjacent to the inner surface 116 and a raised portion 142 extending outwardly from the lower portion 140 so as to from an upside-down 'T"). In another embodiment, shown in FIG. 6, the structural member(s) 128, 130 may define a cross-sectional shape corresponding to a hat-shape (e.g., wherein the structural member(s) 128, 130 includes an opposed pair of lower portions 140 extending directly adjacent to the inner surface 116, raised portions 142 extending outwardly from each lower portion 140 and an upper portion 144 extending between the raised portions 142). Alternatively, as shown in FIG. 7, the structural member(s) 128, 130 may define a cross-sectional shape corresponding to a Z-shape (e.g., wherein the structural member(s) 128, 130 includes a lower portion 140 extending directly adjacent to the inner surface 116, a raised portion 142 extending outwardly from the lower portion 140 and an upper portion 144 extending from the side of the raised portion 142 opposite the side from which the lower portion 140 extends from the raised portion 142). In a further embodiment, the structural member(s) 128, 130 may define a cross-sectional shape corresponding to a J-shape (e.g., wherein the structural member(s) 128, 130 includes a lower portion 140 extending directly adjacent to the inner surface 116, a raised portion 142 extending outwardly from the lower portion 140 and an upper portion 144 extending from one side of the raised portion 142 so as to form an upside-down "J"). In yet another embodiment, as shown FIG. 9, the structural member(s) 128, 130 may define a cross-sectional shape corresponding to an I-shape (e.g., wherein the structural member(s) 128, 130 includes a lower portion 140 extending directly adjacent to the inner surface 116, a raised portion 142 extending outwardly from the lower portion 140 between the ends of such lower portion 140 and an upper portion 114 extending from both sides of the raised portion 142). In another embodiment, as shown in FIG. 10, the structural member(s) 128, 130 may define a cross-sectional shape corresponding to a C-shape (e.g., wherein the structural member(s) 128, 130 includes a lower portion 140 extending directly adjacent to the inner surface 116, a raised portion 142 extending outwardly from an end of the lower portion 140 and an upper portion 144 extending from one side of the raised portion 142). Of course, it should be appreciated that the structural members 128, 130 may also be configured to define various other suitable cross-sectional shapes.

Additionally, it should be appreciated that the first and second sets of structural members 128, 130 may be configured to define the same cross-sectional shape or different cross-sectional shapes. For example, as shown in FIG. 4, the first set of structural members 128 each define a cross-sectional shape corresponding to a T-shape while the second set of structural members 130 each define a cross-sectional shape corresponding to a hat-shape. It should also be appreciated that the cross-sectional shape of each structural member 128, 130 may vary along its length. For example, as described above, some or all of the structural members 128, 130 may include mating features that result in a variation of the cross-sectional shape of such structural members 128, 130 at each intersection 132 defined between the structural members 128, 130.

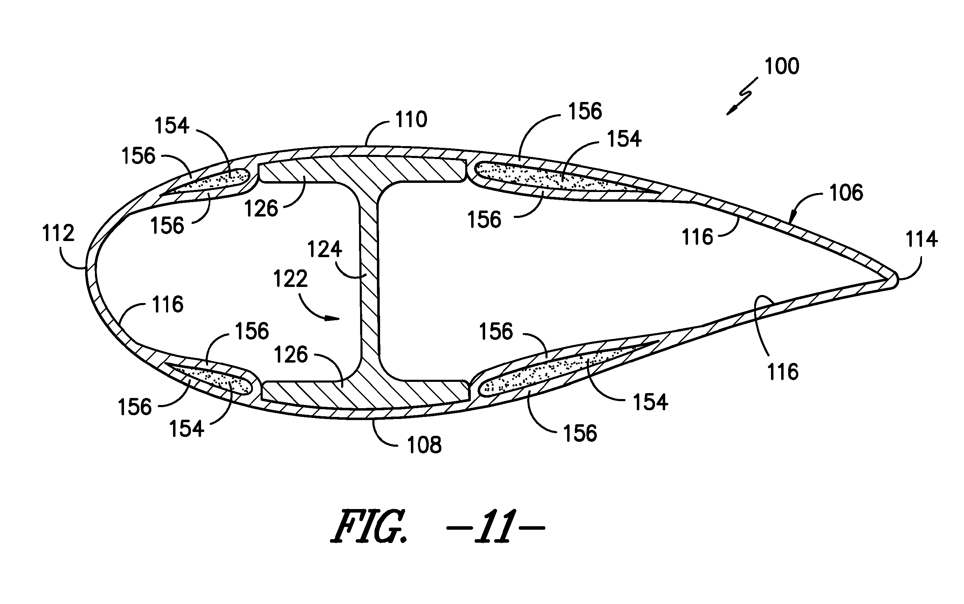

As indicated above, the structural members 128, 130 may generally be configured to provide increased stiffness, strength and/or buckling resistance to the rotor blade 100. Such enhanced structural properties may generally allow for a variation in the materials used to form the body 106 of the rotor blade 100. For example, as is generally understood, the body 106 is typically formed as a layered construction including a core material 154 (FIG. 11), such as wood (e.g., balsa), foam (e.g., extruded polystyrene foam) or a combination of such materials, disposed between layers of laminate composite material 156 (FIG. 11). Unfortunately, the core material generally adds considerable weight to the rotor blade and is typically a major contributor to increased loads during wind turbine operation. However, by positioning the structural members 128, 130 along the inner surface 116 of the body 106 as described above, the structural material of the rotor blade 100 may be moved away from the neutral bending axis of the blade 100 without the inclusion of core material. Thus, as shown in FIG. 3, in several embodiments, the body 116 of the rotor blade 100 may be configured as thin shell formed entirely of a laminate composite material, such as a carbon fiber-reinforced laminate composite or a glass fiber-reinforced laminate composite. Such a configuration of the body 116, along with the addition of the structural members 128, 130, may generally provide a lower mass to stiffness ratio for the rotor blade 100 than that exhibited by a conventional rotor blade including core material.

Additionally, in several embodiments, the disclosed rotor blade 100 may have a hybrid construction in which at least a portion of the body 116 includes structural members 128, 130 extending along its inner surface 116 and another portion of the body 116 has a conventional configuration including core material. For example, in a particular embodiment, an inboard portion of the rotor blade 100 may include the disclosed structural members 128, 130 while an outboard portion of the rotor blade 100 may have a conventional configuration. In such an embodiment, as shown in FIG. 2, a transition point 150 may be defined between such inboard and outboard portions of the rotor blade 100. Thus, in the cross-sectional view of FIG. 3 (taken inboard of the transition point 150), the rotor blade 100 includes the disclosed structural members 128, 130 extending along the inner surface 116. However, in the cross-sectional view of FIG. 11 (taken outboard of the transition point 150), the rotor blade 100 does not include the structural members 128, 130 and the body is formed from a core material 154 disposed between opposed layers of laminate composite material 156.

It should be appreciated that the transition point 150 may be defined at any suitable location along the span 118 of the rotor blade 100. For example, in one embodiment, the transition point 150 may be defined at a spanwise location ranging from about 50% to about 80% of the span 118 (measured from the blade root 102), such as from about 55% to about 75% of the span 118 or from about 60% to about 70% of the span 118 and all other subranges therebetween.

Referring now to FIG. 12, alternative embodiments of the spar member 122 and structural members 128, 130 described above are illustrated in accordance with aspects of the present subject matter. Specifically, as an alternative to the configuration shown in FIGS. 3 and 4, the rotor blade may include a spar member 222 having a generally tubular configuration defining a closed, curved shape. For example, in one embodiment, the tubular spar member 222 may include a first spar cap 226, a second spar cap 227 and first and second shear webs 224, 225 extending outwardly from the first and second spar caps 226, 227. In such an embodiment, each shear web 224, 225 may generally be configured to define a curved profile such that the shear webs 224, 225 extend outwardly from the spar caps 226, 227 at least partially in a chordwise direction, thereby forming a generally elliptical shape. Additionally, as shown in FIG. 12, the spar member 222 may also include auxiliary spar caps 260, 262 disposed within the shear webs 224, 225 between the primary spar caps 226, 228. In another embodiment, the tubular spar member 222 may include any other suitable component(s) that allow the spar member 222 to form a closed, curved shape extending between the pressure and suction sides 108, 110 of the body 106. For example, other suitable configurations for the spar member 222 are disclosed in U.S. Pat. No. 8,186,964 entitled "Spar Assembly for a Wind Turbine Rotor Blade," filed December 10, 2010 and assigned to the General Electric Company, the disclosure of which is hereby incorporated by reference herein it is entirety for all purposes.

Additionally, as shown in FIG. 12, instead of being separately attached to the inner surface 116, the rotor blade 100 may include first and second sets of structural members 228, 230 that are formed integrally with the body 106. For example, in one embodiment, suitable pressure and suction side molds may be manufactured that include grooves or channels at locations corresponding to the desired locations of the structural members 228, 230. The pressure and suction sides 108, 110 of the body 106 may then be molded (e.g., using a suitable lay-up process or other molding process) so as to include the structural members 228, 230 integrally formed along the inner surface 116 thereof. Alternatively, the structural members 228, 230 may comprise separate components that are configured to be inserted or otherwise positioned within the body 116 during the molding process such that the structural members 228, 230 are integrated into the body 116. For example, the structural members 228, 230 may be configured to form a middle structural layer disposed between opposed layers of a composite laminate material.

Moreover, as indicated above, in one embodiment, the first and second sets of structural members 228, 230 may be configured to extend along the inner surface 116 of the body 106 in generally chordwise and spanwise directions, respectively. Alternatively, the structural members 228, 230 may be oriented at an angle relative to the chordwise and spanwise directions. For example, as shown in FIG. 12, the first and second sets of structural members 228, 230 may be oriented relative to the chordwise and spanwise directions at an angle of approximately 45 degrees, with the first set of structural members 228 intersecting the second set of structural members 230 at a 90 degree angle. However, in other embodiments, the structural members 228, 230 may be oriented at any other suitable angle relative to the chordwise and spanwise directions and/or relative to one another.

It should be appreciated that, as indicated above, the present subject matter is also directed to a method for manufacturing a rotor blade 100. The method may generally include positioning a first set of structural members 128, 228 adjacent to the inner surface 116 of the rotor blade 100 and positioning a second set of structural members 130, 230 adjacent to the inner surface 116 such that the second set of structural members 130, 230 intersects the first set of structural members 128, 228 along the inner surface 116. As indicated above, the structural members 128, 130, 228 230 may be positioned adjacent to the inner surface 116 in a variety of different ways. For instance, the structural members 128, 130, 228, 230 may be configured to be separately coupled to the inner surface 116 using any suitable attachment means and/or method known in the art such that the structural members 128, 130, 228, 230 are positioned adjacent to the inner surface 116. In another embodiment, the structural members 128, 130, 228, 230 may be formed integrally with the body 106 of the rotor blade 100, thereby positioning the structural members 128, 130, 228, 230 adjacent to the inner surface 116.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A rotor blade for a wind turbine, the rotor blade comprising:
   a blade root;
   a blade tip;
   a body extending between the blade root and the blade tip, the body having a pressure side and a suction side extending between a leading edge and a trailing edge, the body defining an inner surface;
   a spar member extending between a portion of the inner surface defined on pressure side of the body and a portion of the inner surface defined on the suction side of the body; and
   a plurality of structural members extending adjacent to the inner surface, the plurality of structural members being configured to intersect one another along the inner surface.
2. The rotor blade of clause 1, wherein the plurality of structural members comprises a first plurality of structural members and a second plurality of structural members, the first plurality of structural members intersecting the second plurality of structural members along the inner surface.
3. The rotor blade of clause 1 or 2, wherein the first plurality of structural members are oriented perpendicular to the second plurality of structural members at each intersection defined between the plurality of structural members.
4. The rotor blade of any preceding clause, wherein the first plurality of structural members extend along the inner surface in a generally chordwise direction and the second plurality of structural members extend along the inner surface in a generally spanwise direction.
5. The rotor blade of any preceding clause, wherein the plurality of structural members are separately coupled to the inner surface.
6. The rotor blade of any preceding clause, wherein the plurality of structural members are formed integrally with the body.
7. The rotor blade of any preceding clause, wherein each of the plurality of structural members defines a cross-sectional shape, the cross-sectional shape corresponding to at least one of a Z-shape, a T-shape, a J-shape, an I-shape, a C-shape or a hat-shape.
8. The rotor blade of any preceding clause, wherein the plurality of structural members are coupled to the inner surface along a portion of the body extending inboard or outboard of a transition point of the rotor blade.
9. The rotor blade of any preceding clause, wherein the plurality of structural members are coupled to the inner surface along a portion of the body extending inboard of the transition point, the transition point being defined at a spanwise location ranging from about 50% to about 80% of the span of the rotor blade.
10. The rotor blade of any preceding clause, wherein at least a portion of the body extending outboard of the transition point is formed from a core material disposed between layers of a composite laminate material.
11. The rotor blade of any preceding clause, wherein the spar member comprises a shear web extending between an opposed pair of spar caps.
12. The rotor blade of any preceding clause, wherein the spar member has a tubular configuration.
13. A wind turbine comprising:
   a tower;
   a nacelle mounted on the tower; and
   a rotor coupled to the nacelle, the rotor including a hub and at least one rotor blade extending outwardly from the hub, the at least one rotor blade comprising:
      a blade root;
      a blade tip;
      a body extending between the blade root and the blade tip, the body having a pressure side and a suction side extending between a leading edge and a trailing edge, the body defining an inner surface;
      a spar member extending between a portion of the inner surface defined on pressure side of the body and a portion of the inner surface defined on the suction side of the body; and
      a plurality of structural members extending adjacent to the inner surface, the plurality of structural members being configured to intersect one another along the inner surface.
14. The wind turbine of any preceding clause, wherein the plurality of structural members comprises a first plurality of structural members and a second plurality of structural members, the first plurality of structural members intersecting the second plurality of structural members along the inner surface.
15. The wind turbine of any preceding clause, wherein the first plurality of structural members are oriented perpendicular to the second plurality of structural members at each intersection defined between the plurality of structural members.
16. The wind turbine of any preceding clause, wherein each of the plurality of structural members defines a cross-sectional shape, the cross-sectional shape defining at least one of a Z-shape, a T-shape, a J-shape, an I-shape, a C-shape or a hat-shape.
17. The wind turbine of any preceding clause, wherein the plurality of structural members are coupled to the inner surface along a portion of the body extending inboard or outboard of a transition point of the rotor blade.
18. The wind turbine of any preceding clause, wherein the plurality of structural members are coupled to the inner surface along a portion of the body extending inboard of the transition point, the transition point being defined at a spanwise location ranging from about 50% to about 80% of the span of the rotor blade.
19. The wind turbine of any preceding clause, wherein the spar member comprises a shear web extending between an opposed pair of spar caps.
20. A method for manufacturing a rotor blade having a body defining an inner surface, the method comprising:
   positioning a first plurality of structural members adjacent to the inner surface; and
   positioning a second plurality of structural members adjacent to the inner surface such that the second plurality of structural members intersects the first plurality of structural members along the inner surface.

## Claims

1. A rotor blade (20) for a wind turbine (10), the rotor blade comprising:
a blade root (102);
a blade tip (104);
a body (106) extending between the blade root (102) and the blade tip (104), the body (106) having a pressure side (108) and a suction side (110) extending between a leading edge (112) and a trailing edge (114), the body (106) defining an inner surface (116);
a spar member (122) extending between a portion of the inner surface (116) defined on pressure side (108) of the body (106) and a portion of the inner surface (116) defined on the suction side (110) of the body (106); and
a plurality of structural members extending adjacent to the inner surface (116), the plurality of structural members being configured to intersect one another along the inner surface (116).

2. The rotor blade (20) of claim 1, wherein the plurality of structural members comprises a first plurality of structural members and a second plurality of structural members, the first plurality of structural members intersecting the second plurality of structural members along the inner surface (116).

3. The rotor blade (20) of claim 2, wherein the first plurality of structural members are oriented perpendicular to the second plurality of structural members at each intersection defined between the plurality of structural members.

4. The rotor blade (20) of claim 2 or claim 3, wherein the first plurality of structural members extend along the inner surface in a generally chordwise direction and the second plurality of structural members extend along the inner surface (116) in a generally spanwise direction.

5. The rotor blade (20) of any preceding claim, wherein the plurality of structural members are separately coupled to the inner surface (116).

6. The rotor blade (20) of any preceding claim, wherein the plurality of structural members are formed integrally with the body (106).

7. The rotor blade (20) of any preceding claim, wherein each of the plurality of structural members defines a cross-sectional shape, the cross-sectional shape corresponding to at least one of a Z-shape, a T-shape, a J-shape, an I-shape, a C-shape or a hat-shape.

8. The rotor blade (20) of any preceding claim, wherein the plurality of structural members are coupled to the inner surface (116) along a portion of the body (106) extending inboard or outboard of a transition point of the rotor blade (20).

9. The rotor blade (20) of claim 8, wherein the plurality of structural members are coupled to the inner surface (116) along a portion of the body extending inboard of the transition point, the transition point being defined at a spanwise location ranging from about 50% to about 80% of the span of the rotor blade.

10. The rotor blade (20) of claim 9, wherein at least a portion of the body (106) extending outboard of the transition point is formed from a core material disposed between layers of a composite laminate material.

11. The rotor blade (20) of any preceding claim, wherein the spar member (122) comprises a shear web extending between an opposed pair of spar caps.

12. The rotor blade (20) of any preceding claim, wherein the spar member (122) has a tubular configuration.

13. A wind turbine (10) comprising:
a tower (12);
a nacelle (14) mounted on the tower; and
a rotor (18) coupled to the nacelle, the rotor including a hub and at least one rotor blade (20) extending outwardly from the hub, the at least one rotor blade comprising:
a blade root(102);
a blade tip (104);
a body (106) extending between the blade root and the blade tip, the body having a pressure side and a suction side extending between a leading edge and a trailing edge, the body defining an inner surface;
a spar member (122) extending between a portion of the inner surface defined on pressure side of the body and a portion of the inner surface defined on the suction side of the body; and
a plurality of structural members extending adjacent to the inner surface, the plurality of structural members being configured to intersect one another along the inner surface (116).

14. The wind turbine (10) of claim 13, wherein the plurality of structural members comprises a first plurality of structural members and a second plurality of structural members, the first plurality of structural members intersecting the second plurality of structural members along the inner surface.

15. The wind turbine (10) of claim 14, wherein the first plurality of structural members are oriented perpendicular to the second plurality of structural members at each intersection defined between the plurality of structural members.
